# EUROPEAN PATENT SPECIFICATION

(11) **EP 2 233 241 B1**
(45) Date of publication and mention of the grant of the patent: **16.04.2014**
(21) Application number: 08832766.3
(22) Date of filing: 08.09.2008
(51) Int. Cl.: B23K 35/32, B23K 1/19, C22C 1/02, C22C 27/04, H01J 1/13, H01J 23/05, H01J 25/587, H01J 61/06

(54) **BRAZING MATERIAL, ELECTRON TUBE, MAGNETRON AND BRAZING METHOD**
LÖTMATERIAL, ELEKTRONENRÖHRE, MAGNETRON UND LÖTVERFAHREN
MATÉRIAU DE BRASAGE, TUBE ÉLECTRONIQUE, MAGNÉTRON ET PROCÉDÉ DE BRASAGE

(30) Priority: 31.10.2007 JP 2007283226
(43) Date of publication of application: 29.09.2010
(73) Proprietor: Toshiba Hokuto Electronics Corp., Asahikawa-shi Hokkaido 078-8835 (JP); Toshiba Materials Co., Ltd., Isogo-Ku Yokohama-Shi Kanagawa 235-0032 (JP)
(72) Inventor: UEDA, Makoto, Asahikawa-shi Hokkaido 078-8335 (JP); MORIOKA, Tsutomu, Yokohama-shi Kanagawa 235-0032 (JP)
(74) Representative: Joly, Jean-Jacques
(86) International application number: PCT/JP2008/002467
(87) International publication number: WO 2009/057239

(56) References cited:
- JP-A- 11 213 946
- JP-A- 58 016 795
- JP-A- 60 115 395
- JP-A- 63 119 999
- JP-B- 35 005 623
- KR-B1- 100 761 502
- US-A- 2 725 287
- US-A- 2 775 809

## Description

### Technical Field

The present invention relates to a brazing material for high melting point metal that is refractory metal, high melting point metal-bonded parts using the brazing material, electron tubes particularly magnetrons and a method for brazing.

### Background Art

High melting point metals such as tungsten (W), molybdenum (Mo), and Tantalum (Ta) are widely used for many parts exposed to a high temperature while the apparatus is operating. They are put into practical use in bulbs such as lighting bulbs including electric lamps and discharge lamps, and electron tubes including magnetrons, transmitting tubes and X-ray tubes, electrodes for glass furnace, plasma electrodes, heating elements, blades for generator turbine, etc. Brazing is used as well as mechanical bonding and welding as for the method to bond a plurality of high melting point metal parts together. With respect to brazing, Ru-Mo brazing material is used for at least a part whose main component is Mo. The cathode of magnetron is one of the representative examples thereof.

The magnetron can effectively oscillate microwaves, so that it is used for microwave ovens, medical services, communication systems, etc. For example, an oscillating body of a usual magnetron for microwave oven comprises an anode cylinder, a cathode structure having a thermal electron emitting cathode filament in the inside space of the anode cylinder, a plurality of vanes arranged radially toward the cathode filament from the inner wall of the anode cylinder, etc., and further the end surfaces of the anode cylinder are provided with pole pieces supplying a magnetic field to the interaction space for the thermal electrons.

In the configuration mentioned above, the construction supplies an electric power to the cathode structure through the input portion of the oscillating body, and retrieves outside a high frequency output of the oscillating body through an antenna disposed at the output portion.

The cathode structure comprises a cathode filament, end hats, and support rods, and then the cathode filament is heated to 1700 °C to 1850 °C during operation. A pair of end hats are bonded to the both ends of the cathode filament respectively, and further welded to a pair of support leads which support the end hats and are leads planted from the ceramic cathode stem at the input portion inside the tube. Highly reliable thorium-included tungsten is used for the cathode filament because the cathode is heated at a high temperature as described above, and molybdenum (Mo) is used for the end hat and the support rod which support the cathode. The end hat is bonded together with the support rod by welding, and the cathode filament and the end hat are bonded together with a brazing material. Sintered metal having the composition of 43 weight (wt)% of Ru - Mo having the melting point at 1940 °C or paste brazing material in which both ruthenium (Ru) powder and molybdenum (Mo) powder are immingled in a paste are widely used (Refer to Patent Document 1).

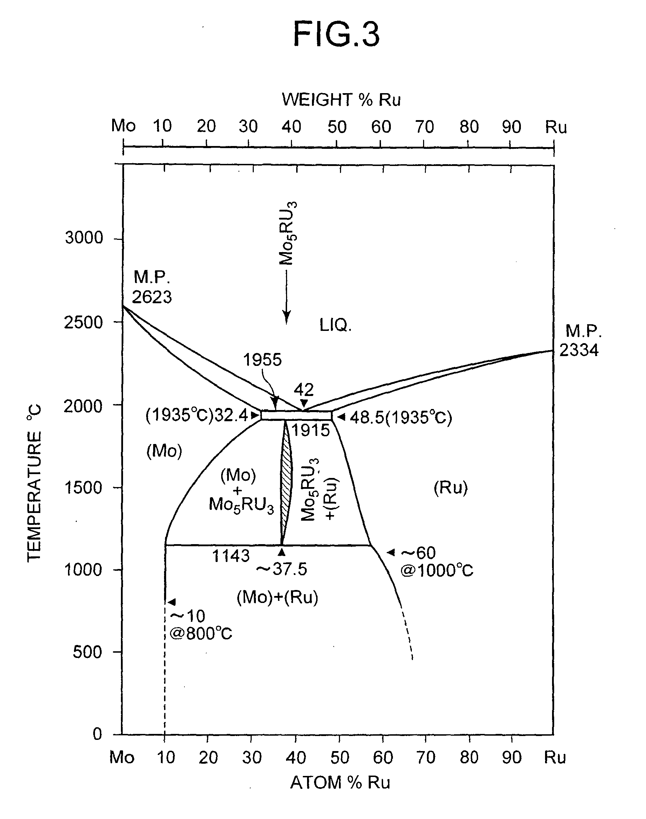

Though the component elements have high melting points like the melting point of 2334 °C for Ru and the melting point of 2623 °C for Mo as shown by the phase diagram in FIG. 3, the melting point of 43wt% of Ru - Mo composition becomes low i.e. 1940 °C because of the eutectic reaction. In the case of the brazing material, the component elements never evaporate if melting by high frequency heating is carried out between 1940 °C and 2334 °C. 0007

Because simple Mo substance is difficult to be melted as its melting point is high, the brazing material before fusion is not an alloy but a kind of paste that is sintered substance from metal powder or metal-mixed powder added by a binder material.

The melting point of brazing material should be higher than the operating temperature of the cathode filament, and furthermore necessary to be approximately 1900 °C or more on the safety side. Melting of the brazing material is carried out by high frequency heating. Because the equipment becomes large scale and influence on the cathode structure is large as the melting point becomes high, the melting point of the brazing material is desirable to be 1950 ± 50 °C. When 43 wt% of Ru - Mo brazing material (melting point is 1940 °C) is melted, brazing is carried out by heating to approximately 2050 °C using high frequency heating.
[Patent Literature 1] Japanese Laid-open Patent No. H8-293265

JP 11 213946, JP 60 115395, JP 63 113999 and JP 58 016735 disclose brazing material of Ru-Mo compositions.

US 2,725,287 discloses brazing material of Mo/B or Mo/Si material compositions. KR 100 761 502 B1 discloses brazing material of Fe/Mo/Ni or Pol/Fe/Mo/Ni or Mo/Ni/Co material compositions. US 2775809 discloses brazing material of Mo/B material compositions.

### Disclosure of the Invention

### Technical Problems

W, Mo, Ta, and Ru are rare metals, and above all, Ru has become unobtainable. Therefore, instead of 43 wt% of Ru - Mo brazing material, appearance of an easily obtainable brazing material that does not contain Ru and has a property similar thereto is eagerly anticipated.

### Solution to Problems

According to the present invention there is provided a brazing material according to claim 1, an electron tube according to claim 3, a magnetron according to claim 4 and brazing methods according to claims 5 and 6.

### Advantageous Effect of Invention

The present invention provides a brazing material for high melting point metal, which has the eutectic temperature of 2000 °C or less, by comprising 1 to 3.5 wt% of C - 1 to 3.5 wt% of B - remainder of Mo. Because Ru metal is not used, a brazing material of a low cost can be used stably and resource saving can be well performed in comparison with conventional Ru - Mo brazing material.

In a magnetron joining of the cathode structure can be carried out at a desirable melting point, and further, unnecessary elements do not adhere to the cathode filament because no evaporation of the components by melting occurs, so that carburizing treatment for activation of the cathode filament can be normally executed. In addition, unnecessary elements do not adhere to the support rods, so that deterioration of vacuum degree due to gas emitted from adhered elements by the heat while the magnetron is operating can be prevented.

### Brief Description of Drawings

FIG. 1 is a schematic cross sectional view of a magnetron for explaining one example of the present invention.
FIG. 2A is a magnified cross sectional view of the cathode structure shown in FIG. 1.
FIG. 2B is a partial cross sectional view explaining the manufacturing method of the cathode structure shown in FIG. 2A.
FIG. 3 is a binary alloy phase diagram of Ru - Mo.
FIG. 4 is a binary alloy phase diagram of Fe - Mo.
FIG. 5 is a binary alloy phase diagram of C - Mo.
FIG. 6 is a binary alloy phase diagram of B - Mo.

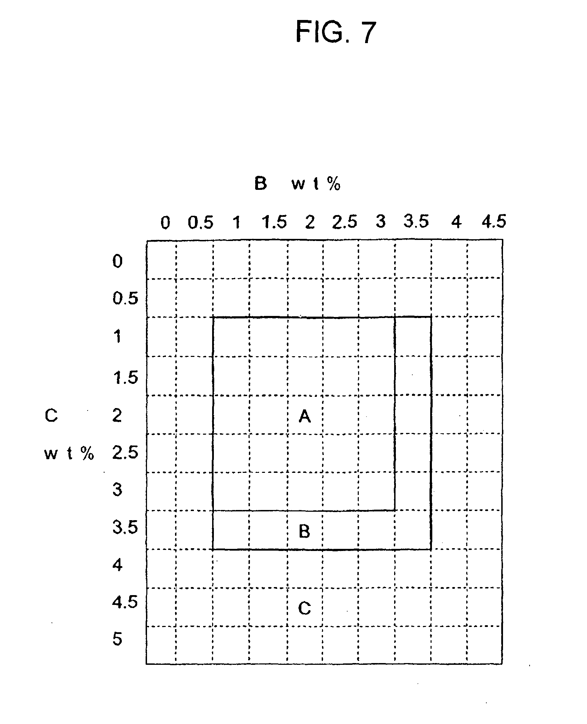

FIG. 7 is a diagram showing the melting temperature region corresponding to the composition ratio of C and B to Mo.

### Reference Signs List

0018
11: anode cylinder
12: vane
20: cathode structure
21: center rod
22: side rod
23: top end hat
24: bottom end hat
25: cathode filament
26, 27: brazing material
40: cathode stem

### Description of Examples

According to the present invention there is provided a brazing material comprising of 1 to 3.5 wt% of C - 1 to 3.5 wt% of B - remainder of Mo.

According to an example of the present invention, the brazing material is used for bonding the cathode filament to the end hat of the cathode structure of a magnetron. For example, if the composition is 3 wt% of C - 3 wt% of B - remainder of Mo, the brazing material having the melting point of 2000 °C is obtained.

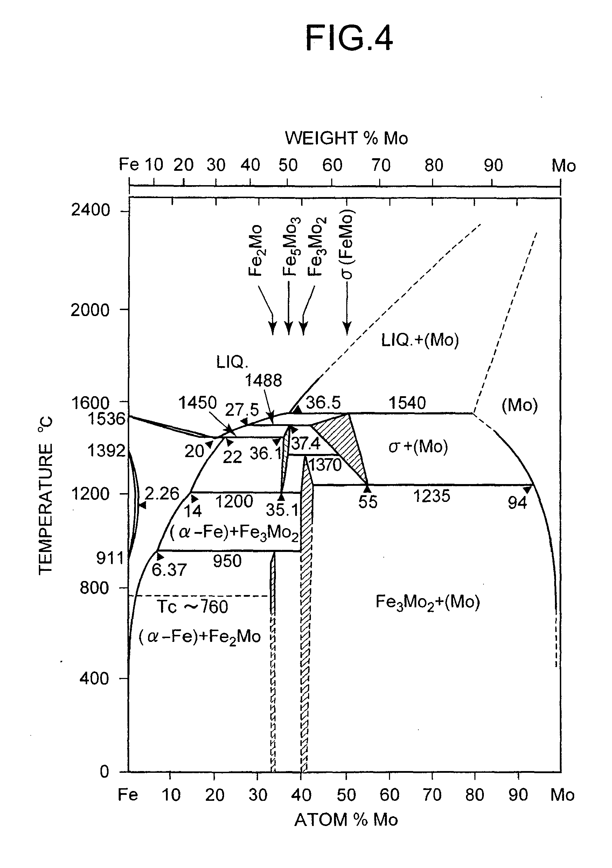

As a substitution of Ru for the conventional Ru - Mo brazing material, a low melting point metal is required to be mingled in order to lower the melting point because the melting point of Mo is high. For the purpose of reference, the case in which Ru is substituted by a usual low melting point metal, e.g. Fe (iron), will be explained. FIG. 4 shows the binary alloy phase diagram of Fe - Mo (The Moffat Collection, Handbook of Binary Phase Diagram; ditto for the following binary alloy phase diagrams), and it is known that the melting point is 1900°C for the composition of 34wt% of Fe - Mo. However, because Fe (melting point of 1538°C) exists by itself (not an alloy) at the stage of sintered parts or paste, Fe evaporates and is deposited on circumambient cathode parts in the middle of being heated up to 2050°C by high frequency heating. Deposition thereof on the cathode filament interferes normal carburization, and deposition thereof on the support rod deteriorates the vacuum degree of the tube due to gas generated by the heat caused by operation of the magnetron after it is sealed in vacuum.

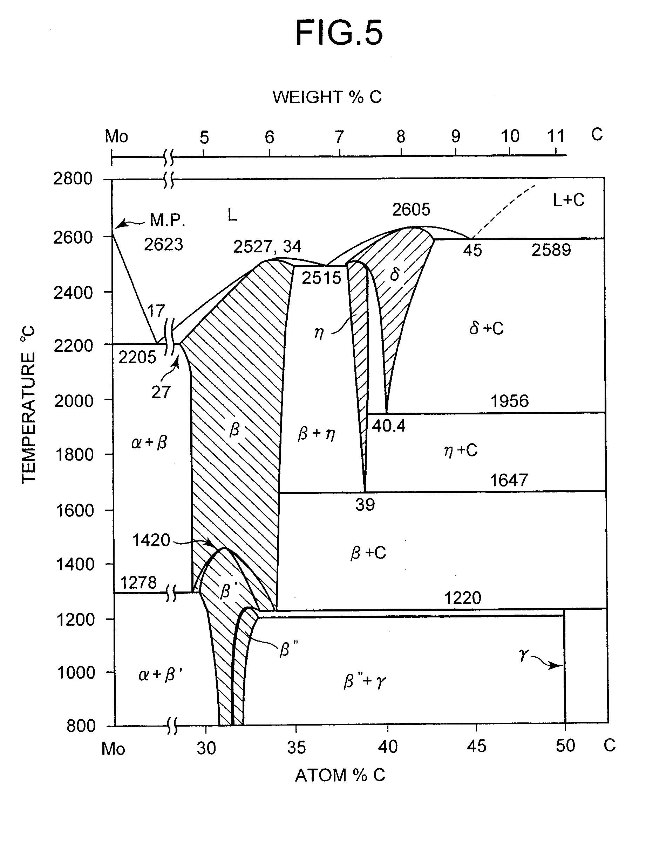

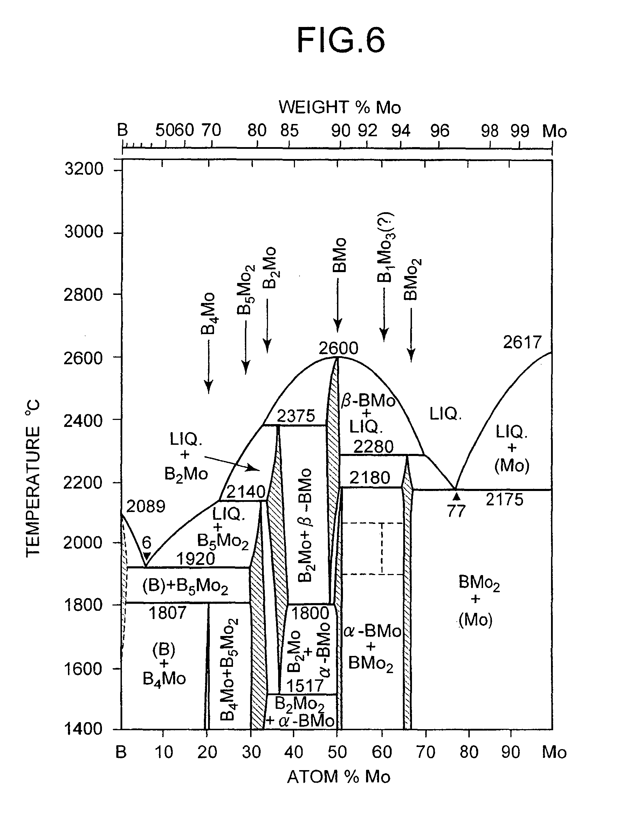

Therefore, it is desirable for the brazing material that the constituting elements thereof whose melting points are higher than the high frequency heating temperature should be combined together. The content to satisfy the above is the combination of elements having the eutectic reaction at a temperature lower than the melting points of the elements. An example of the present invention is 3 wt% of C - 3 wt% of B - remainder of Mo, which can decrease the melting point further less than 3 wt% of C - Mo (composition for eutectic reaction)(the binary phase diagram is shown by FIG. 5) and 3 wt% of B - Mo (composition for eutectic reaction)(the binary phase diagram is shown by FIG. 6).

Here,
melting point of C (carbon) is 3550°C;
melting point of B (boron) is 2092°C;
melting point of Mo (Molybdenum) is 2623°C;
melting point of 3 wt% of C - Mo (composition for eutectic reaction) is 2205°C; and melting point of one example of the present invention i.e. 3 wt% of C - 3 wt% of B - remainder of Mo is approximately 2000°C.

The 3 wt% of C - 3 wt% of B - remainder of Mo in which elements C and B are dissolved in the mother phase Mo, can be melted without each element being evaporated upon controlling the high frequency heating temperature in the brazing process to be lower than 2092°C of the melting point of B, which is the lowest of the three composing elements, and higher than the eutectic reaction temperature. The reason why both C and B have the composition ratio with width of 1 to 3.5% is that the function as a brazing material can be brought out by eutectic reaction in the range of the controllable heating temperature mentioned above.

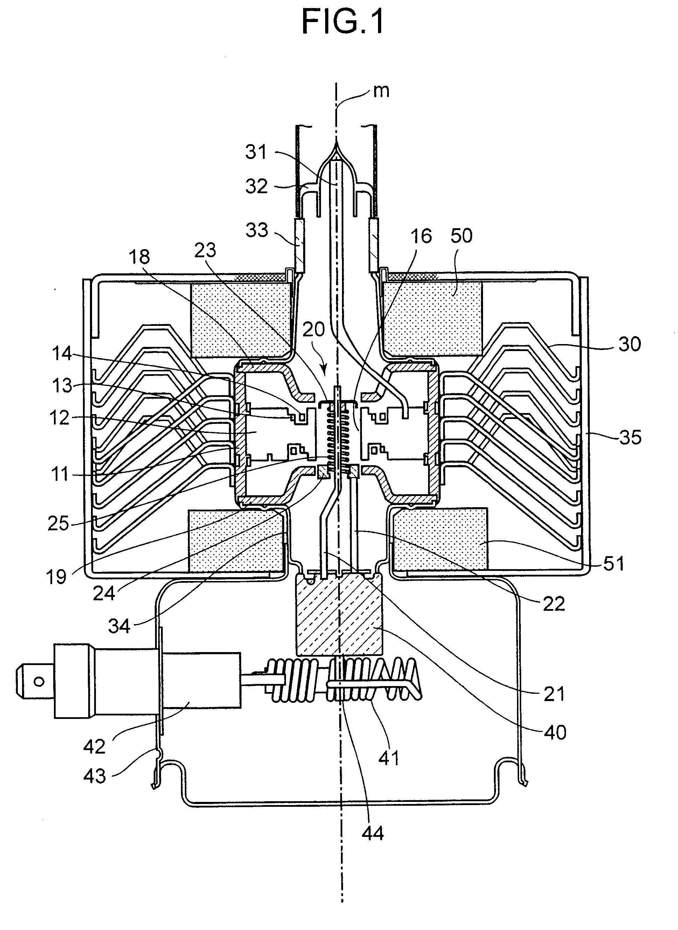

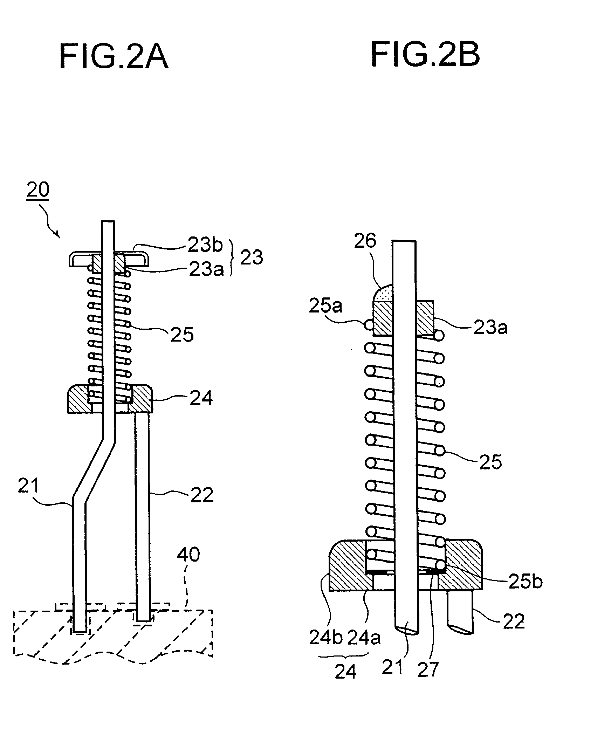

Next, an example of the structure of magnetron to which the present invention is applied will be shown in FIG. 1 and FIG. 2. The oscillation body of the magnetron contains an anode cylinder 11 and a cathode structure 20 arranged therein. The cathode structure 20 is positioned along the tube axis m. Furthermore, a plurality, e.g. 10 pieces of vanes 12 is provided from the inner wall of the anode cylinder 11 toward the cathode structure 20 in the radial direction thereof and the direction of the circumference of the anode cylinder 11 at an equal interval. The outer side end portion of the vane 12 is secured to the inner wall of the anode cylinder 11, and the inner side end portion thereof is a free end 16. The top side and the bottom side of each vane 12 in the figure are alternately connected to a pair of first strap rings 13 with a large diameter and a pair of second strap rings 14 with a diameter smaller than the first strap ring 13, positioned inside the first strap ring 13 respectively.

A first pole piece 18 and a second pole piece 19 are disposed on the top and bottom opening portions of the anode cylinder 11, and a plurality of cooling fins 30 to cool the anode cylinder 11 are disposed on the periphery of the anode cylinder 11. Additionally, one end of an antenna 31 constituting the output portion is connected to an exhausting pipe 32. the other end of the antenna 31 is connected to one of the vanes 12 through the inside space of an insulating cylinder 33, etc. Furthermore, a metal container 34 is hermetically bonded to the second pole piece 19, and a cathode stem 40 to be a part of the input portion, which extends along the tube axis m, is secured to the metal container 34.

Annular permanent magnets 50 and 51 are disposed over the first pole piece 18 and under the second pole piece 19 respectively. In addition, a magnetic yoke 35 forming a magnetic circuit is disposed so as to surround the anode cylinder 11, the cooling fins 30, and the permanent magnets 50, 51. A coil 41 and a capacitor 42 constituting a filter circuit are connected to the outer portion of the cathode stem 40.

The cathode stem 40 and the coil 41 are surrounded by the filter case 43, and the capacitor 42 is attached so as to penetrate the filter case 43.

Then, a high frequency signal is generated by the aid of a resonance cavity formed with the vane 12, etc. The high frequency signal is retrieved through the antenna 31 connected to the anode vane 12.

As shown in FIG. 2A, the cathode structure 20 comprises a pair of support rods, i.e. the center rod 21 and the side rod 22, which are planted on the inside portion of the cathode stem 40 of alumina ceramic, the end hats 23, 24 attached on each end of the support rods and facing to each other, and the cathode filament 25 interleaved and supported by these end hats. The center rod 21 is extended from the input side to the output side along the tube axis m, i.e. the central axis of the anode cylinder, and the top end hat 23 is mounted on the top thereof. The top end hat 23 is comprised of a cylindrical boss 23a provided in the vicinity of the rod end and a cup-like portion 23b having a rod-through hole mounted on the rod end. The bottom end hat 24 provided in the input side is formed as disk shape through which the center rod can pass in non-contact, and a part of the periphery of the disc is fit to the end of the side rod 22 by means of e.g. welding. The bottom end hat 24 is constituted of a disc-like portion 24a and a circular ring portion 24b. The cathode filament 25 is in the shape of coil, formed like a cylinder that forms an interaction space between the open end 16 of the vane 12 and itself in such a manner as to surround the center rod 21. One end 25a of the filament winds around the outer periphery of the boss 23a of the top end hat and the other end 25b is placed on the disc-like portion 24a of the bottom end hat. The cathode filament 25 is formed with thorium tungsten and the end hats 23, 24 and the support rods 21, 22 are formed with molybdenum.

As shown in FIG. 2B, 3 wt% of C - 3wt% of B - Mo brazing material 26, 27 is applied to the contact portion of the cathode filament 25 and the top and bottom end hats 23, 24. The brazing material, upon being heated to approximately 2050 °C by means of high frequency heating, is melted caused by occurring of eutectic reaction and these contact portions are brazed and bonded.

The support rods 21, 22 are connected to the electrode lead terminal 44 provided on the cathode stem 40 and come to be leads for supplying a current and a tube current to the cathode filament.

### (Example 1)

Powders of C, B and Mo are blended and mixed together so as to be the blending of 3 wt% of C - 3 wt% of B -remainder of Mo for the eutectic reaction, and formed in a disc like sintered metal part under the following condition. This sintered part 27 is set on the disc-like portion of the bottom end hat as shown in FIG. 2B, and then heated by high frequency heating under condition of coming into contact with the cathode filament. By controlling the heating temperature to be 2050°C that is lower than the melting point of B, i.e. 2092°C, each element was melted without evaporation, so that brazing could be carried out.
grain size of C: 4 to 5 µm
grain size of B: 4 to 5 µm
grain size of Mo: 3 to 6 µm
sintered temperature: 1200°C

### (Example 2)

Powders of C, B and Mo with the following grain sizes are blended and mixed together so as to be the blending of 1 wt% of C - 1 wt% of B -remainder of Mo for the eutectic reaction, and formed in a paste with a binder. As shown in FIG. 2B, the paste-like brazing material 26 is laid on the boss 23a of the top end hat by a dispenser and dried. As a consequence of melting the above at 2050°C by high frequency heating, brazing could be performed without evaporation of the elements.
C (1wt%), grain size: 4 to 5 µm
B (1wt%), grain size: 4 to 5 µm
Mo (remainder), grain size: 3 to 6 µ m

### (Example 3)

Changing the mixing ratio of C, B and Mo as follows in the example 2, they are blended and mixed together, then formed in a paste with a binder. As shown in FIG. 2B, the paste-like brazing material 26 is laid on the boss 23a of the top end hat by a dispenser and dried. As a consequence of melting the above at 2050°C by high frequency heating, brazing could be performed without evaporation of the elements.
C (2wt%), grain size: 4 to 5 µm
B (2wt%), grain size: 4 to 5 µm
Mo (remainder), grain size: 3 to 6 µ m

Although the present invention was explained by the examples mentioned above, brazing process is not restricted to the above-mentioned explanation. For instance, respective element powders can be mixed and melted together in advance and formed in an eutectic alloy in manufacturing of the brazing material, and thereafter, they can be again crashed into powder in order to become a paste or formed in a brazing material part suitable for a brazing shape such as a disc.

### (Examples 1 to 13) and (Comparative Examples 1 to 6)

Table 1 is a chart showing the melting temperature of the examples 1 to 13 and the comparative examples 1 to 6 where the composition ratio of C, B and Mo is varied using a high frequency melting device. The used grain size of each element is the same as that of the example 1. The high frequency melting device is a 15kW type in which high frequency power is supplied to an electromagnetic coil. The device has a structure in which a plurality of cathode structures shown in FIG. 2 can be inserted. Brazing source material in paste or a sintered disc is heated and melted on the boss 23a of the top end hat or the bottom end hat 24 using the electromagnetic coil. These examples and the comparative examples are heated simultaneously together with the standard specimen whose melting point is previously known, and then the melting temperature of the test samples was measured with reference to the melting condition of the standard specimen. The measuring temperature is given at a step of approximately 20°C. Therefore, the measurement assess temperature has an error of about ±10°C.

**Table 1**

| | Composition (wt%) | | | Melting Temperature °C (±10°C) |
|---|---|---|---|---|
| | C | B | Mo | |
| Example 1 | 3.0 | 3.0 | remainder | 1977 |
| Example 2 | 1.0 | 1.0 | remainder | 1977 |
| Example 3 | 1.0 | 2.5 | remainder | 1977 |
| Example 4 | 1.0 | 3.5 | remainder | 1999 |
| Example 5 | 1.5 | 1.5 | remainder | 1977 |
| Example 6 | 1.5 | 3.0 | remainder | 1977 |
| Example 7 | 2.0 | 2.0 | remainder | 1977 |
| Example 8 | 3.0 | 1.0 | remainder | 1977 |
| Example 9 | 3.0 | 1.5 | remainder | 1977 |
| Example 10 | 3.0 | 2.0 | remainder | 1977 |
| Example 11 | 3.0 | 2.5 | remainder | 1977 |
| Example 12 | 3.5 | 1.0 | remainder | 1999 |
| Example 13 | 3.5 | 3.5 | remainder | 1999 |
| Comparative Example 1 | 0 | 3.0 | remainder | 2138 |
| Comparative Example 2 | 0.5 | 0.5 | remainder | 2205 |
| Comparative Example 3 | 3.0 | 0 | remainder | 2205 |
| Comparative Example 4 | 4.0 | 4.0 | remainder | 2091 |
| Comparative Example 5 | 4.5 | 5.0 | remainder | 2091 |
| Comparative Example 6 | 6.0 | 6.0 | remainder | 2091 |

FIG. 8 shows the temperature distribution for respective compositions given by the table, where the region A is 1977°C region (1968 to 1988°C); the region B is 1999°C region (1989 to 2010°C); and the region C is a region beyond 2010°C. The region A (Examples 1 to3, 5 to 11) and the region B (Examples 4, 12, and 13) correspond to the melting point of 2010°C or less, so that they are suitable for the brazing material and can compare favorably with Ru - Mo brazing material with respect to the characteristic. The appropriate range as the brazing material is 1 to 3.5 wt% of C - 1 to 3.5 wt% of B - remainder of Mo, and more desirably is 1 to 3.0 wt% of C - 1 to 3.0 wt% of B - remainder of Mo.

The present invention is not restricted to the examples for the magnetron, but can be widely applied to the brazing material for bonding of high melting point metal parts such as W, Mo, Ta, etc. It is broadly applicable in a range without any departure from the present invention, e.g. lamps for lighting or electron tubes, electrodes for plasma, electrodes for glass furnace, heating elements like filaments and melting boats, turbine blades of dynamos and atomic reactor' s armor tiles.

## Claims

1. A brazing material comprising 1 to 3.5 weight (wt) % of C 1 to 3.5 wt% of B and the remainder of Mo.

2. The brazing material according to Claim 1, wherein the brazing material is usable for bonding high melting point metal parts of W or Mo.

3. An electron tube having an electrode of metal containing W or Mo and being brazed by the brazing material according to claim 1.

4. A magnetron comprising a cathode structure containing a cathode filament(25), a pair of end hats (23, 24) bonded to both ends of the cathode filament (25) with a brazing material (26) and support rods (21) connected to the end hats (23, 24) respectively, wherein the brazing material (26) is the brazing material according to claim 1.

5. A brazing method of bonding at least two high melting point metal parts comprising:
a step of allocating a brazing material constituted of C (carbon) powder, B (boron) powder and Mo (molybdenum) powder, sintered at a ratio of 1 to 3.5 wt% of C 1 to 3.5 wt% of B and the remainder of Mo, on a bonding portion of the high melting point metal parts to be bonded, where the metal parts are brought together,
a step of melting the brazing material by heating, and step of solidifying the melted brazing material.

6. A brazing method of bonding at least two high melting point metal parts comprising:
a step of allocating a brazing material constituted of C (carbon) powder, B (boron) powder and Mo (molybdenum) powder, mixed at a ratio of 1 to 3.5 wt% of C 1 to 3.5 wt% of B and the remainder of Mo in paste with a binder, on a bonding portion of the high melting point metal parts to be bonded, where the metal parts are brought together,
a step of melting the brazing material by heating, and
a method step of solidifying the melted brazing material.

7. The brazing method according to Claims 5 or 6, wherein the high melting point metal parts are a cathode filament (25) and an end hat (23) of a magnetron.

## Patentansprüche

1. Lötmaterial, umfassend 1 bis 3,5 Gewichts-% C, 1 bis 3,5 Gewichts-% B und im Übrigen Mo.

2. Lötmaterial nach Anspruch 1, wobei das Lötmaterial zum Verbinden von Metallteilen aus W oder Mo mit hohen Schmelzpunkten geeignet ist.

3. Elektronenröhre, die eine Elektrode aus W- oder Mo-haltigem Metall aufweist, die mittels des Lötmaterials nach Anspruch 1 gelötet ist.

4. Magnetron, umfassend eine Kathodenstruktur, die ein Kathodenfilament (25), ein Paar Endkappen (23, 24), die mittels eines Lötmaterials (26) an beide Enden des Kathodenfilaments (25) gelötet sind, und Stützstäbe (21), die jeweils mit den Endkappen (23, 24) verbunden sind, beinhaltet, wobei das Lötmaterial (26) das Lötmaterial nach Anspruch 1 ist.

5. Lötverfahren zum Verbinden von wenigstens zwei Teilen aus Metall mit hohem Schmelzpunkt, umfassend:
einen Schritt des Bereitstellens eines Lötmaterials, das aus C-(Kohlenstoff)-Pulver, B-(Bor)-Pulver und Mo-(Molybdän)-Pulver besteht, das in einem Verhältnis von 1 bis 3,5 Gewichts-% C, 1 bis 3,5 Gewichts-% B und im Übrigen Mo gesintert ist, auf einem Verbindungsabschnitt der zu verbindenden Teile aus Metall mit hohem Schmelzpunkt, an dem die Metallteile zusammengebracht werden,
einen Schritt des Schmelzens des Lötmaterials durch Erhitzen und
einen Schritt des Aushärtenlassens des geschmolzenen Lötmaterials.

6. Lötverfahren zum Verbinden von wenigstens zwei Teilen aus Metall mit hohem Schmelzpunkt, umfassend:
ein Schritt des Bereitstellens eines Lötmaterials, das aus C-(Kohlenstoff)-Pulver, B-(Boron)-Pulver und Mo-(Molybdän)-Pulver besteht, das in einem Verhältnis von 1 bis 3,5 Gewichts-% C, 1 bis 3,5 Gewichts-% B und im Übrigen Mo in einer Paste mit einem Bindungsmittel gemischt ist, auf einem Verbindungsabschnitt der zu verbindenden Teile aus Metall mit hohem Schmelzpunkt, an dem die Metallteile zusammengebracht werden,
einen Schritt des Schmelzens des Lötmaterials durch Erhitzen und
einen Schritt des Aushärtenlassens des geschmolzenen Lötmaterials.

7. Lötmaterial nach Anspruch 5 oder 6, wobei die Teile aus Metall mit hohem Schmelzpunkt ein Kathodenfilament (25) und eine Endkappe (23) eines Magnetrons sind.

## Revendications

1. Matériau de brasage comprenant 1 à 3,5 % en poids (p) de C, 1 à 3,5 % en poids de B et le reste de Mo.

2. Matériau de brasage selon la revendication 1, où le matériau de brasage est utilisable pour lier des pièces métalliques à haut point de fusion de W ou Mo.

3. Tube électronique ayant une électrode de métal contenant W ou Mo et étant brasée par le matériau de brasage selon la revendication 1.

4. Magnétron comprenant une structure de cathode contenant un filament de cathode (25), une paire de chapeaux terminaux (23, 24) liés aux deux extrémités du filament de cathode (25) avec un matériau de brasage (26) et des tiges de support (21) reliées aux chapeaux terminaux (23, 24) respectivement, où le matériau de brasage (26) est le matériau de brasage selon la revendication 1.

5. Procédé de brasage de liaison d'au moins deux pièces métalliques à haut point de fusion comprenant :
une étape de distribution d'un matériau de brasage constitué de poudre de C (carbone), de poudre de B (bore) et de poudre de Mo (molybdène), frittées à un rapport de 1 à 3,5 % en poids de C, 1 à 3,5 % en poids de B et le reste de Mo, sur une partie de liaison des pièces métalliques à haut point de fusion destinées à être liées, où les pièces métalliques sont mises ensemble,
une étape de fusion du matériau de brasage par chauffage, et
une étape de solidification du matériau de brasage fondu.

6. Procédé de brasage de liaison d'au moins deux pièces métalliques à haut point de fusion comprenant :
une étape de distribution d'un matériau de brasage constitué de poudre de C (carbone), de poudre de B (bore) et de poudre de Mo (molybdène), mélangées à un rapport de 1 à 3,5 % en poids de C, 1 à 3,5 % en poids de B et le reste de Mo en pâte avec un liant, sur une partie de liaison des pièces métalliques à haut point de fusion destinées à être liées, où les pièces métalliques sont mises ensemble,
une étape de fusion du matériau de brasage par chauffage, et
une étape de procédé de solidification du matériau de brasage fondu.

7. Procédé de brasage selon la revendication 5 ou 6, où les pièces métalliques à haut point de fusion sont un filament de cathode (25) et un chapeau terminal (23) d'un magnétron.
